# FASCICULE DE BREVET EUROPEEN

(11) **EP 0 468 841 B1**
(45) Date de publication et mention de la délivrance du brevet: **15.06.1994**
(21) Numéro de dépôt: 91401864.3
(22) Date de dépôt: 05.07.1991
(51) Int. Cl.: B65G 17/02, B65G 15/60

(54) **Convoyeur à bande sans fin**
Bandförderer
Belt conveyor

(30) Priorité: 09.07.1990 FR 9008696
(43) Date de publication de la demande: 29.01.1992
(73) Titulaire: UNIVERSITE JOSEPH FOURIER (GRENOBLE 1), F-38041 Grenoble Cédex (FR)
(72) Inventeur: Günther, Roland, W-4230 Wesel (DE); Terriez, Jean-Michel, F-38330 Montbonnot (FR)
(74) Mandataire: Casalonga, Axel

(56) Documents cités:
- DE-A- 1 938 118
- DE-C- 226 080
- GB-A- 2 054 507
- US-A- 1 530 707

## Description

La présente invention concerne le domaine des convoyeurs à bande sans fin destinés au transport de matières qui sont en général déposés en continu sur le brin supérieur de la bande, notamment au voisinage de l'une de ses extrémités, pour être déversées par gravité à son autre extrémité.

Différents types de convoyeurs à bande sans fin sont actuellement connus.

Les convoyeurs à bande les plus fréquemment utilisés présentent à leurs extrémités des tambours de renvoi de la bande sans fin et présentent une multiplicité de rouleaux horizontaux de soutien du brin supérieur de la bande sans fin ainsi que quelques rouleaux de soutien de son brin inférieur. Pour éviter les pertes de matériaux et augmenter la quantité de matières transportées, les convoyeurs à bande sans fin ci-dessus présentent des rouleaux à axe s inclinés qui permettent de relever les parties latérales du brin supérieur de la bande sans fin.

On connaît par ailleurs des convoyeurs à bande sans fin dans lesquels les bords longitudinaux du brin supérieur de la bande sont accouplés en ligne, la bande formant alors une poche ou gouttière longitudinale. Les matières transportées se trouvent alors protégées vis-à-vis de l'extérieur et aucune perte de matières ne peut intervenir. Plusieurs convoyeurs à bande sans fin de ce type sont connus.

On connaît (GB-A-2 054 507) en particulier un convoyeur à bande sans fin dont les bords longitudinaux sont munis de profilés continus dans lesquels sont insérés des câbles sans fin. En ligne, les profilés latéraux du brin supérieur de la bande sans fin sont soutenus ou maintenus accouplés par deux lignes de galets latéraux disposées de part et d'autre des bords accouplés de la bande.

On connaît également un convoyeur à bande sans fin qui comprend un câble porteur longitudinal sur la partie supérieure duquel viennent en appui, l'un sur l'autre, les bords du brin supérieur de la bande, ces bords étant munis de rainures et de nervures complémentaires engagées l'une dans l'autre et d'aimants souples de maintien. Sont en outre prévus des galets qui viennent appuyer sur les bords superposés de la bande de manière à les maintenir en appui contre le câble porteur.

Les convoyeurs à bande sans fin ci-dessus peuvent en outre présenter des rouleaux permettant de porter la partie centrale de leur brin supérieur.

Un convoyeur selon le préambule de la revendication 1 est connu du document DE-A-1 938 118.

Les principaux inconvénients des convoyeurs à bande et câbles sans fin ci-dessus résident dans le fait qu'ils nécessitent un positionnement précis des bords longitudinaux du brin supérieur de la bande sans fin afin de permettre leur accouplement et que les déformations que subissent les bords de la bande sans fin provoquent des usures relativement rapides qui n'assurent pas aux bandes sans fin des longévités suffisantes. En outre, les bandes sans fin ci-dessus présentent des coûts de fabrication élevés.

Le but de la présente invention est de proposer un convoyeur à bande sans fin qui notamment permet, vis-à-vis des convoyeurs connus, d'augmenter la longévité de la bande sans fin, de diminuer son coût de fabrication et ses coûts de fonctionnement et d'entretien.

Le but est atteint par le transporteur selon la revendication 1.

Selon l'invention, chaque bord longitudinal de la bande sans fin peut en outre être solidaire d'un troisième câble sans fin.

Selon l'invention, chaque élément d'accrochage comprend de préférence deux parties articulées entre elles dans le sens longitudinal de la bande, dont l'une des parties est fixée sur le bord longitudinal de la bande et dont l'autre est fixée sur les câbles sans fin associés.

Le transporteur selon l'invention peut avantageusement comprendre des supports portant chacun au moins une poulie de soutien et au moins une poulie de réaction associées à un bord longitudinal de la bande sans fin.

De préférence, cette poulie de soutien et cette poulie de réaction sont à axes parallèles et sont placées de part et d'autre des câbles.

Selon une disposition avantageuse de l'invention, lesdites poulies de soutien et les poulies de réaction sont disposées de telle sorte que sur au moins une partie de la longueur du brin supérieur et/ou du brin inférieur de la bande sans fin, les bords longitudinaux de cette dernière sont rapprochés.

Le transporteur, selon l'invention, peut également comprendre, à ses extrémités, des poulies de renvoi desdits câbles.

Le transporteur, selon l'invention, peut en outre comprendre, à ses extrémités, des organes de renvoi sur lesquels la bande sans fin prend appui, ces organes de renvoi et d'appui pouvant être constitués par une multiplicité de rouleaux.

La présente invention sera mieux comprise à l'étude d'un convoyeur à bande décrit à titre d'exemple non limitatif et illustré par le dessin sur lequel :
- la figure 1 représente une vue en perspective d'une bande sans fin d'un convoyeur selon l'invention ;
- la figure 2 représente une coupe transversale de la partie latérale du convoyeur dans sa partie médiane, sans sa structure support ;
- la figure 3 représente une coupe transversale du convoyeur, à l'une de ses extrémités ;
- les figures 4 à 7 représentent des coupes transversales de structures supports de la bande sans fin du convoyeur en différents endroits de sa longueur ;
- la figure 8 montre une vue latérale de l'une des parties d'extrémité du convoyeur ;
- la figure 9 représente une vue en bout de l'extrémité du convoyeur selon la figure 8 ;
- la figure 10 représente une coupe transversale, dans sa partie médiane, du convoyeur avec une autre structure support ;
- la figure 11 représente une vue latérale de la figure 10 ;
- la figure 12 représente une vue de dessus d'un élément d'accrochage de la bande sans fin du convoyeur ;
- la figure 13 représente une coupe transversale, selon XIII-XIII, de l'élément d'accrochage de la figure 12 ;
- la figure 14 représente une coupe longitudinale, selon XIV-XIV de l'élément d'accrochage de la figure 13.

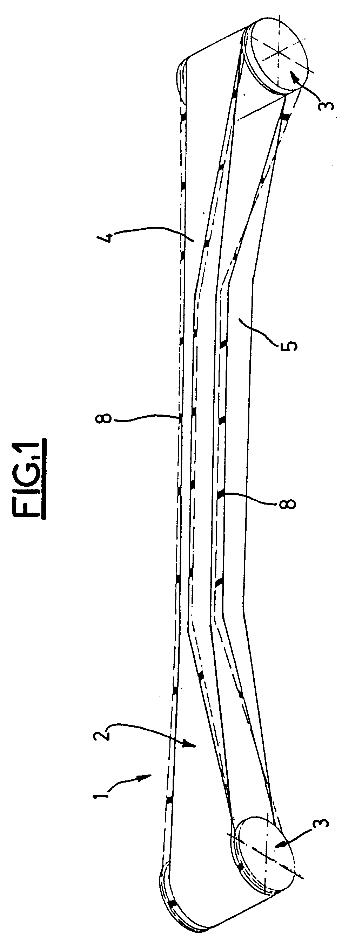

En se reportant à la figure 1, on voit que le convoyeur à bande sans fin, repéré d'une manière générale par la référence 1, comprend une bande sans fin 2 de grande longueur et, à ses extrémités, des organes de renvoi de la bande sans fin, repérés d'une manière générale par la référence 3, de telle sorte qu'en ligne, c'est-à-dire entre les organes de renvoi opposés 3, le brin supérieur 4 et le brin inférieur 5 de la bande sans fin 2 sont sensiblement rectilignes et l'un au-dessus de l'autre, le brin supérieur 4 étant destiné au transport de matières.

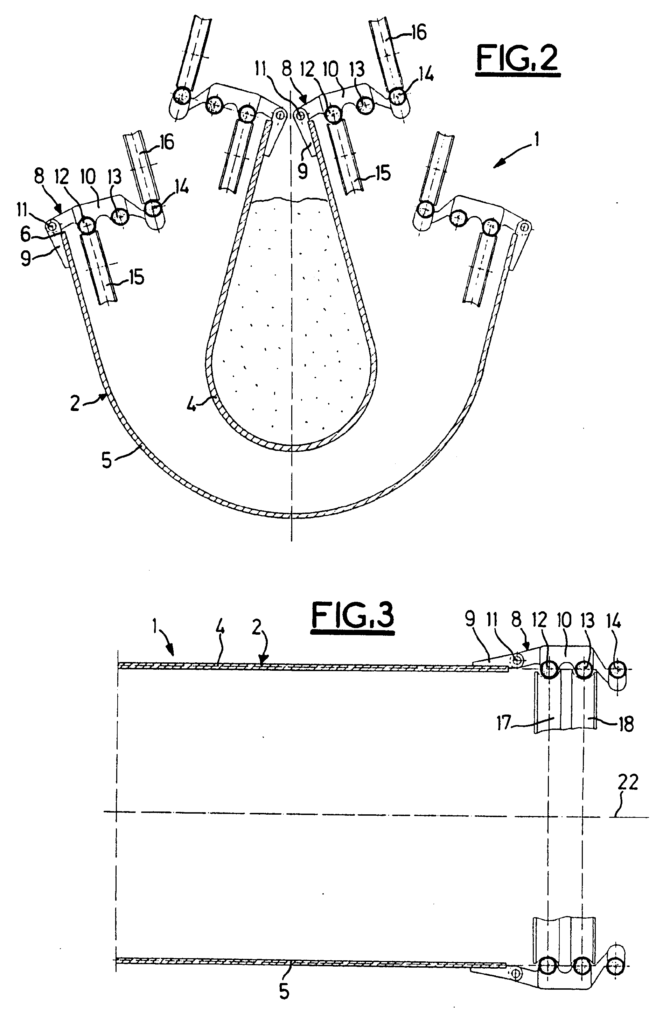

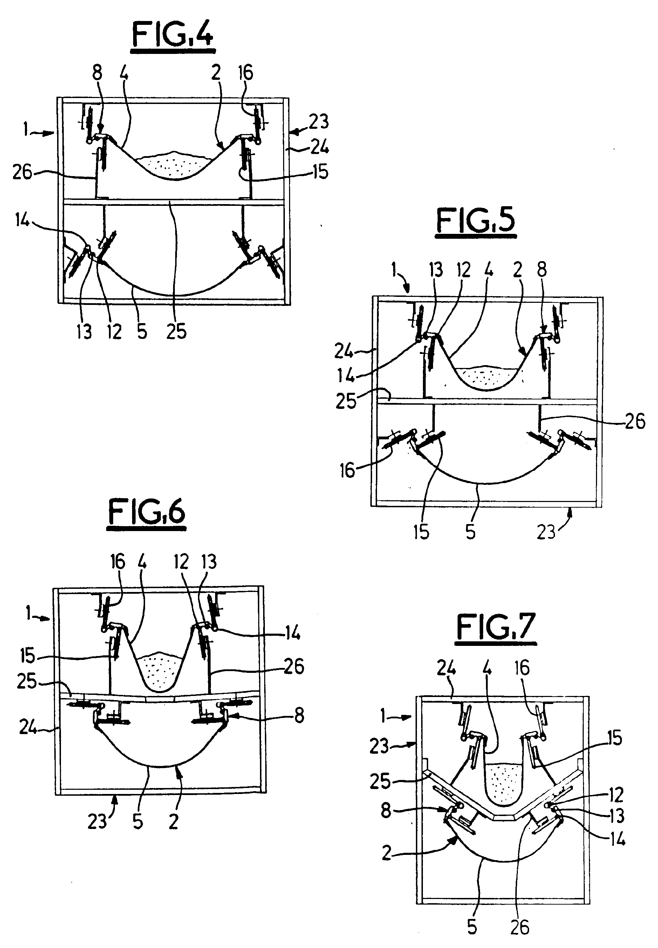

En se reportant notamment aux figures 2 et 3, on voit que les bords longitudinaux opposés 6 de la bande sans fin 2 sont munis d'une multiplicité d'éléments d'accrochage repérés d'une manière générale par la référence 8 qui s'étendent latéralement et en saillie et qui sont régulièrement espacés.

Chaque élément d'accrochage 8 comprend une partie 9 qui est fixée sur le bord de la bande 2 par tous moyens appropriés de fixation ponctuelle et une partie 10 qui est montée de manière articulée sur la partie 9 par l'intermédiaire d'un axe d'articulation 11 qui s'étend parallèlement au bord de la bande 2, de telle sorte que la partie articulée 10 peut pivoter autour du bord de la bande 2.

De chaque côté de la bande sans fin 2, le convoyeur 1 comprend trois câbles sans fin 12, 13 et 14 sur lesquels sont fixées, par tous moyens appropriés de fixation ponctuelle, les parties articulées 10 des éléments d'accrochage 8 associés aux bords longitudinaux 6 et 7 de la bande , ces câbles ayant sensiblement la même longueur que la bande 2.

Dans l'exemple, les câbles sans fin 12, 13 et 14 sont fixés sur des des éléments d'accrochage 8, à distances égales les uns des autres, le câble 12 étant le plus proche de l'articulation 11 des éléments d'accrochage 8 et à distance de cette articulation, le câble 14 étant le plus éloigné et le câble 13 étant entre le câble 12 et le câble 14.

Dans les parties en ligne 4 et 5 de la bande sans fin 2, les chemins des câbles 12 adjacents aux bords 6 et 7 de la bande sans fin 2 sont respectivement déterminés par quatre séries de galets de soutien 15 et les chemins des câbles 14 les plus éloignés des bords 6 et 7 de la bande sans fin 2 sont respectivement déterminés par quatre séries de galets de réaction 16.

Dans les quatre séries précitées de poulies respectivement associées aux quatre bords longitudinaux des brins supérieur et inférieur 4 et 5 de la bande sans fin, les poulies de soutien 15 et les poulies de réaction 16 sont disposées de telle sorte que leurs axes soient parallèles et qu'elles soient respectivement disposées de part et d'autre du plan contenant les câbles sans fin 12, 13 et 14 et perpendiculairement à ce plan. En outre, les poulies de soutien 15 et les poulies de réaction 16 sont disposées de manière à produire un effet de levier permettant de suspendre en porte-à-faux les bords 6 de la bande sans fin 2. Ainsi, les bords 6 de la bande sans fin 2 sont uniquement portés par l'intermédiaire des séries de poulies de soutien 15 et des séries de poulies de réaction 16.

En se reportant à la figure 3, on voit que les organes de renvoi 3 présentent, de chaque côté de la bande sans fin 2, des poulies de renvoi 17 et 18 sur lesquelles passent respectivement les câbles sans fin 12 et 13, ces poulies de renvoi 17 et 18 étant montées sur le même axe et présentant le même diamètre. Le câble extérieur 14 pourrait également passer sur des poulies de renvoi.

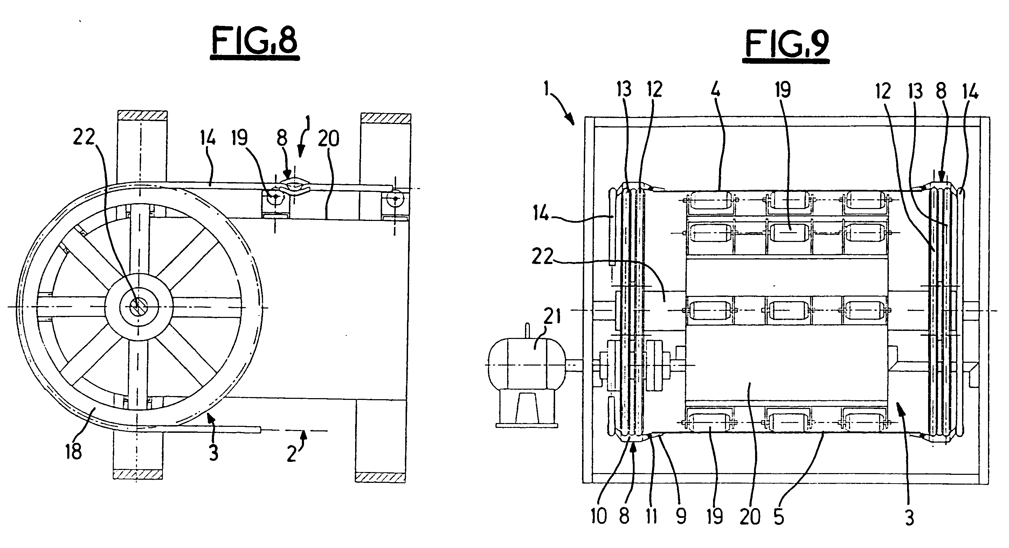

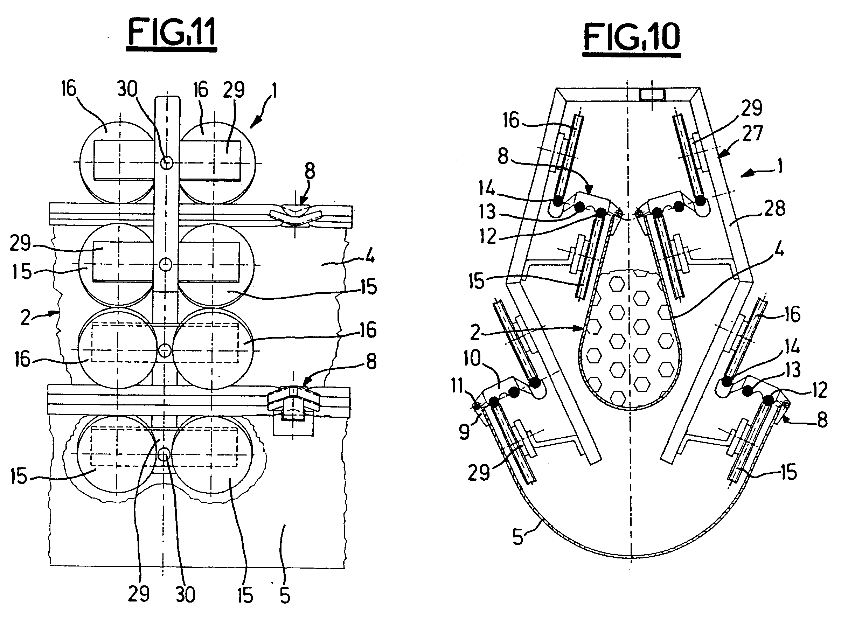

En se reportant aux figures 8 et 9, on voit que les organes de renvoi 3 comprennent en outre une multiplicité de rouleaux 19 qui sont montés sur la face extérieur d'une plaque 20 en forme de U dont les branches s'étendent horizontalement, longitudinalement à la bande sans fin 2 et sur lesquels prend appui cette bande sans fin 2 afin que cette dernière soit guidée et soutenue lors de son renvoi. Ainsi, aux extrémités du convoyeur, les poulies de renvoi 17 et 18 ne portent pas la bande 2 et servent uniquement au renvoi des câbles latéraux.

En outre, afin d'entraîner en rotation les quatre poulies de renvoi 17 et 18 de l'une des extrémités du convoyeur, est prévu un moteur électrique 21 relié à l'arbre transversal 22 qui les porte.

En se reportant maintenant aux les figures 4 à 7, on voit que les dispositions respectives des séries précitées de poulies de soutien 15 et de poulies de réaction 16 permettent de faire varier ou modifier l'écartement entre les bords 6 de la bande sans fin 2.

Dans l'exemple représenté sur ces figures, le convoyeur 1 comprend une multiplicité de supports 23 qui comprennent chacun un cadre rectangulaire 24 qui s'étend transversalement à la bande sans fin 2 et au travers duquel passent les deux brins 4 et 5 de cette dernière, ces cadres 24 présentant chacun une traverse 25 passant entre le brin supérieur 4 et le brin inférieur 5 de la bande sans fin 2. Chaque cadre 24 présente en outre des pattes 26 qui portent une poulie de soutien 15 et une poulie de soutien 16 associées à chacun des bords de ces brins 4 et 5, les axes de ces poulies s'étendant dans le plan du cadre 24.

Dans l'exemple représenté sur les figures 1, 4 à 7, les poulies de soutien 15 et les poulies de réaction 16 des quatre séries précitées de poulies sont montées sur les différents supports 23 prévus en différents endroits le long des brins 4 et 5 de la bande sans fin 2 de telle sorte qu'à partir des organes de renvoi 3 prévus aux extrémités du convoyeur 1, les bords 6 de la bande sans fin 2 vont en se rapprochant progressivement et que, sur toute la partie centrale longitudinale des brins 4 et 5, les bords 6 et 7 de ces derniers sont parallèles.

Ainsi, sur la majeure partie de la longueur des brins 4 et 5 de la bande sans fin 2, ces brins 4 et 5 sont en forme de gouttières ou de poches longitudinales dont les bords sont suspendus aux câbles sans fin 12, 13 et 14 par l'intermédiaire des éléments d'accrochage 8. Dans l'exemple représenté, les bords longitudinaux 6 et 7 du brin supérieur 4 de la bande sans fin sont plus rapprochés l'un de l'autre que les bords longitudinaux du brin inférieur 5.

En outre, on peut observer que les poulies de soutien 15 associées aux bords longitudinaux 6 du brin supérieur 4 de la bande sans fin 2 sont disposées en-dessous des câbles sans fin 12 et que les galets de réaction 16 sont disposés au-dessus des câbles sans fin 14, les parties articulées 10 des éléments d'accrochage 8 s'étendant vers l'extérieur et les poulies ci-dessus étant à l'extérieur de la gouttière que forme le brin supérieur 4.

En ce qui concerne le brin inférieur 5 de la bande sans fin 2, les poulies de soutien 15 et les poulies de réaction 16 associées aux bords 6 du brin inférieur 5 de la bande sans fin 2 sont dans des positions inverses de celles décrites ci-dessus.

Il y a lieu d'observer que, quelques soient les positions des parties articulées 10 des éléments d'accrochage 8, qui sont déterminées par les séries de galets de soutien 15 et de galets de réaction 16 sur lesquelles les câbles 12 et 14 prennent appui, les bords longitudinaux 6 de la bande sans fin 2 sont suspendus par l'intermédiaire d'une liaison articulée constituée par les axes d'articulation 11 des éléments d'accrochage 8. Ainsi, les brins supérieur et inférieur 4 et 5 de la bande sans fin 2 prennent leurs formes en gouttières longitudinales sans qu'il y ait de contraintes de torsion sur les bords de la bande sans fin 2.

D'une manière générale, les matières à transporter par le convoyeur 1 sont déposées sur l'une des parties d'extrémité du brin supérieur 4 de la bande sans fin 2 et sont déversées par gravité à son autre extrémité, ces matières étant protégées sur toute la partie centrale de ce brin 4 dans laquelle il est en forme de gouttière suspendue. Cependant, comme les positions relatives des bords longitudinaux 6 du brin supérieur 4 de la bande sans fin 2 sont déterminées par les séries de poulies de soutien 15 et de poulies de réaction 16 sur lesquelles prennent appui les câbles sans fin 12 et 14, il est tout à fait possible de prévoir d'écarter en n'importe quels endroits de la longueur du brin 4 les bords de la bande sans fin 2 afin de pouvoir déposer des matières à transporter en ces endroits.

En se reportant maintenant aux figures 10 et 11, on voit qu'on a représenté un support 27 qui se différencie du support 23 décrit précédemment par le fait qu'il présente un cadre 28 en forme de losange qui est traversé par le brin supérieur 4 de la bande sans fin 2, le brin inférieur 5 de cette bande sans fin 2 s'étendant en-dessous du cadre 28. Les poulies de soutien 15 et les poulies de réaction 16 qui sont respectivement associées aux bords longitudinaux des brins supérieur et inférieur 4 et 5 de la bande sans fin 2 sont groupées par paires montées sur des balanciers 29 qui sont articulés sur le cadre 28 grâce à des axes 30.

En se reportant aux figures 12 à 15, on va maintenant décrire une structure des éléments d'accrochage 8 effectuant une liaison articulée entre la bande sans fin 2 et les câbles sans fin 12, 13 et 14.

La partie 9 des éléments d'accrochage 8 comprend une plaque 31 posée à plat sur le bord de la bande sans fin 2 et fixée à ce dernier par exemple par l'intermédiaire de rivets 32 dont seuls les axes sont représentés. Cette plaque 31 porte deux bras parallèles 33 qui s'étendent vers l'extérieur, au-delà du bord longitudinal de la bande sans fin 2.

La partie 10 des éléments d'accrochage 8 comprend une plaque 34 qui présente une patte en saillie 35 engagée entre les bras 33 de la partie 9, l'axe d'articulation 11 parallèle au bord longitudinal de la bande sans fin 2 reliant la patte 35 et les branches 33 de manière à constituer une chape.

Par rapport à la bande sans fin 2, la plaque 34 s'étend latéralement vers l'extérieur et présente, sur l'une de ses surfaces, deux rainures longitudinales 36 et 37 parallèles à l'axe d'articulation 11 et dans lesuelles s'engagent latéralement les câbles sans fin 12 et 13, ainsi que, sur son autre face, une rainure longitudinale 38 également parallèle à l'axe d'articulation 11 et dans laquelle s'engage latéralement le câble sans fin 13 et 14.

Pour maintenir les deux câbles 12 et 13 dans les rainures 36 et 37, la partie 10 des organes d'accrochage 8 comprend un sabot 39 qui présente deux rainures longitudinales 40 et 41 dans lesquelles sont engagées latéralement les câbles 12 et 13. Ce sabot 39 est fixé à la plaque 34 grâce à des boulons 42 dont seuls les axes ont été représentés, ces boulons étant disposés entre les câbles 12 et 13, dans la zone médiane du sabot 39.

Pour maintenir le câble sans fin 14, la partie 10 des organes d'accrochage 8 comprend un sabot 43 qui présente une rainure longitudinale 44 dans laquelle est engagé latéralement le câble sans fin 14. Ce sabot 43 est fixé à la plaque 34 par l'intermédiaire de boulons 45 dont seuls les axes ont été représentés, ces boulons 45 étant disposés entre les câbles 13 et 14.

Comme on peut le voir plus précisément sur les figures 14 et 15, les rainures longitudinales, que présentent la plaque 34, le sabot 39 et le sabot 43, sont formées de telle sorte que les câbles 12, 13 et 14 s'étendent au-travers de la partie 10 des éléments d'accrochage 8 en formant un oméga très allongé.

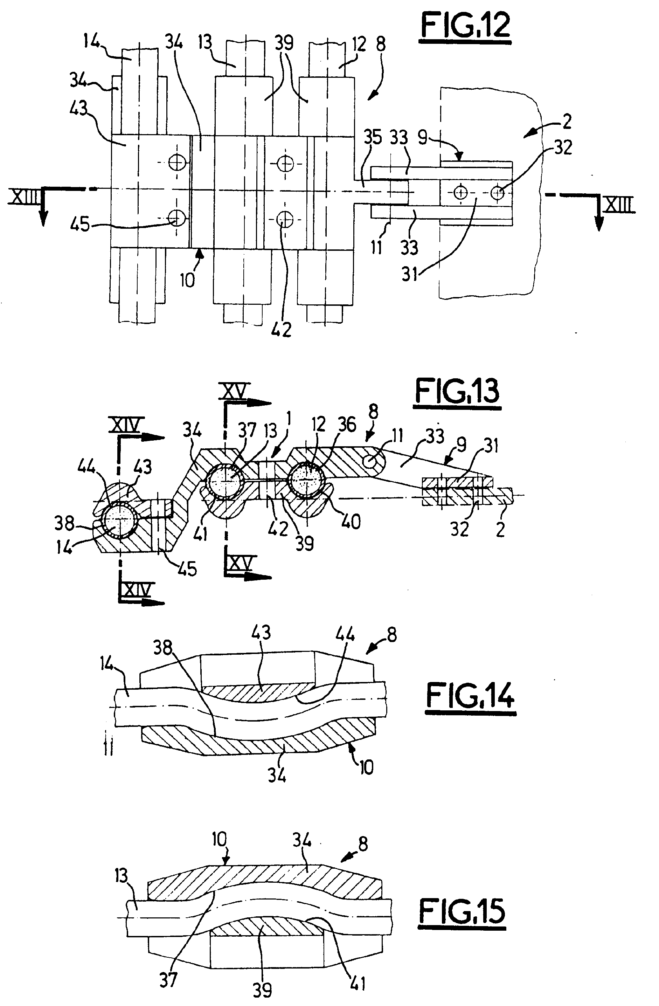

Comme on le voit plus précisément sur la figure 13, la plaque 34 est, entre les câbles sans fin 13 et 14, repliée en S de telle sorte que, dans l'exemple, les câbles sans fin 12 et 13 d'une part et le câble sans fin 14 d'autre part s'étendent de part et d'autre d'un plan, l'axe d'articulation 11 étant légèrement décalé du côté des câbles 12 et 13 et, lorsque la plaque 31 est parallèle à ce plan, ce dernier passe par le bord de la bande sans fin 2.

En outre, les faces extérieures des sabots 39 et 43 sont formées de manière à pouvoir passer et être guidées dans les gorges des poulies précitées sur lesquelles défilent les câbles sans 12, 13 et 14.

## Revendications

1. Transporteur à bande sans fin dont les bords longitudinaux (6, 7) sont respectivement solidaires d'au moins deux câbles sans fin (12, 14) par l'intermédiaire d'éléments d'accrochage (8) en saillie, caractérisé par le fait que lesdits éléments d'accrochage (8) sont espacés dans le sens longitudinal de la bande sans fin (2) et que, sur chacun des côtés de la bande sans fin et sur au moins une partie de sa longueur, le chemin desdits câbles (12, 14) est déterminé par des poulies de soutien (15) et des poulies de réaction (16) sur lesquelles prennent respectivement appui lesdits câbles sans fin en produisant un effet de levier sur les éléments d'accrochage (8) permettant de suspendre les bords (6, 7) de la bande sans fin.

2. Transporteur selon la revendication 1, caractérisé par le fait que chaque bord longitudinal de la bande sans fin (2) est également solidaire d'un troisième câble sans fin (13).

3. Transporteur selon la revendication 1, caractérisé par le fait que chaque élément d'accrochage (8) comprend deux parties (9, 10) articulées entre elles dans le sens longitudinal de la bande, dont l'une des parties est fixée sur le bord longitudinal de la bande et dont l'autre est fixée sur les câbles sans fin associés.

4. Transporteur selon l'une quelconque des revendications précédentes, caractérisé par le fait qu'il comprend des supports (23) portant chacun au moins une poulie de soutien (15) et au moins une poulie de réaction (16) associées à un bord longitudinal de la bande sans fin.

5. Transporteur selon la revendication 4, caractérisé par le fait que la poulie de soutien (15) et la poulie de réaction (16) sont à axes parallèles et sont placées de part et d'autre des câbles (12, 14).

6. Transporteur selon l'une quelconque des revendications précédentes, caractérisé par le fait que lesdites poulies de soutien (15) et les poulies de réaction (16) sont disposées de telle sorte que sur au moins une partie de la longueur du brin supérieur et/ou du brin inférieur de la bande sans fin (2), les bords longitudinaux (6, 7) de cette dernière sont rapprochés.

7. Transporteur selon l'une quelconque des revendications précédentes, caractérisé par le fait qu'à ses extrémités, il comprend des poulies de renvoi (17, 18) desdits câbles.

8. Transporteur selon l'une quelconque des revendications précédentes, caractérisé par le fait qu'à ses extrémités, il comprend des organes de renvoi (19) sur lesquels la. bande sans fin (2) prend appui.

9. Transporteur selon la revendication 8, caractérisé par le fait que lesdits organes de renvoi et d'appui sont constitués par une multiplicité de rouleaux (19).

## Patentansprüche

1. Endlosförderband, dessen Längsränder (6, 7) jeweils mittels vorstehenden Mitnehmergliedern (8) mit mindestens zwei Endlosseilen (12, 14) verbunden sind, dadurch gekennzeichnet, daß jene Mitnehmerglieder (8) in Längsrichtung des Endlosbandes (2) beabstandet sind und daß auf jeder Seite des Endlosbandes und über zumindest Teil seiner Länge der Weg jener Seile (12, 14) von Stützscheiben (15) und Reaktionsscheiben (16) bestimmt wird, auf die sich jeweils jene Endlosseile stützen und dabei eine Hebelwirkung auf die Mitnehmerglieder (8) ausüben, so daß die Ränder (6, 7) des Endlosbandes aufgehängt werden können.

2. Fördereinrichtung nach Anspruch 1, dadurch gekennzeichnet, daß jeder Längsrand des Endlosbandes (2) ebenfalls mit einem dritten Endlosseil (13) verbunden ist.

3. Fördereinrichtung nach Anspruch 1, dadurch gekennzeichnet, daß jedes Mitnehmerglied (8) zwei Teile (9, 10) umfaßt, die in Längsrichtung des Bandes einander angelenkt sind, wobei eines der Teile am Längsrand des Bandes befestigt ist und das andere an den zugeordneten Endlosseilen befestigt ist.

4. Fördereinrichtung nach einem der vorhergehenden Ansprüche, dadurch gekennzeichnet, daß sie Stützen (23) umfaßt, die jeweils mindestens eine Stützscheibe (15) und mindestens eine Reaktionsscheibe (16) tragen, die einem Längsrand des Endlosbandes zugeordnet sind.

5. Fördereinrichtung nach Anspruch 4, dadurch gekennzeichnet, daß die Stützscheibe (15) und die Reaktionsscheibe (16) parallele Achsen aufweisen und auf beiden Seiten der Seile (12, 14) angebracht sind.

6. Fördereinrichtung nach einem der vorhergehenden Ansprüche, dadurch gekennzeichnet, daß jene Stützscheiben (15) und die Reaktionsscheiben (16) so angeordnet sind, daß die Längsränder (6, 7) des Endlosbandes (2) über zumindest Teil der Länge des Obertrums und/oder des Untertrums des Endlosbandes (2) dicht beieinanderliegen.

7. Fördereinrichtung nach einem der vorhergehenden Ansprüche, dadurch gekennzeichnet, daß sie an ihren Enden Trommeln (17, 18) zum Umlenken jener Seile umfaßt.

8. Fördereinrichtung nach einem der vorhergehenden Ansprüche, dadurch gekennzeichnet, daß sie an ihren Enden Umlenkorgane (19) umfaßt, auf die sich das Endlosband (2) stützt.

9. Fördereinrichtung nach Anspruch 8, dadurch gekennzeichnet, daß jene Umlenk- und Stützorgane aus einer Vielzahl von Rollen (19) bestehen.

## Claims

1. Endless band conveyor, the longitudinal edges (6, 7) of which are respectively fastened to at least two endless cables (12, 14) by means of projecting catch elements (8), characterized in that the said catch elements (8) are spaced in the longitudinal direction of the endless band (2), and in that, on each of the sides of the endless band and over at least some of its length, the path of the said cables (12, 14) is determined by supporting pulleys (15) and reaction pulleys (16), on which the said endless cables bear respectively, generating a lever effect on the catch elements (8), thus making it possible to suspend the edges (6, 7) of the endless band.

2. Conveyor according to Claim 1, characterized in that each longitudinal edge of the endless band (2) is likewise fixed to a third endless cable (13).

3. Conveyor according to Claim 1, characterized in that each catch element (8) comprises two parts (9, 10) which are articulated on one another in the longitudinal direction of the band and of which one part is fastened to the longitudinal edge of the band and the other is fastened to the associated endless cables.

4. Conveyor according to any one of the preceding claims, characterized in that it comprises supports (23), each carrying at least one supporting pulley (15) and at least one reaction pulley (16) which are associated with a longitudinal edge of the endless band.

5. Conveyor according to Claim 4, characterized in that the supporting pulley (15) and reaction pulley (16) are of parallel axes and are located on either side of the cables (12, 14).

6. Conveyor according to any one of the preceding claims, characterized in that the said supporting pulleys (15) and reaction pulleys (16) are arranged in such a way that, over at least some of the length of the upper strand and/or of the lower strand of the endless band (2), the longitudinal edges (6, 7) of the latter are close to one another.

7. Conveyor according to any one of the preceding claims, characterized in that, at its ends, it possesses pulleys (17, 18) for the return of the said cables.

8. Conveyor according to any one of the preceding claims, characterized in that, at its ends, it possesses return members (19) on which the endless band (2) bears.

9. Conveyor according to Claim 8, characterized in that the said return and bearing members consist of a multiplicity of rollers (19).
